# EUROPÄISCHE PATENTANMELDUNG

(11) **EP 3 395 743 A1**
(43) Veröffentlichungstag der Anmeldung: **31.10.2018**
(21) Anmeldenummer: 17167989.7
(22) Anmeldetag: 25.04.2017
(51) Int. Cl.: B66C 1/12, F16G 13/12, F16G 15/04

(54) **VERKÜRZUNGSVORRICHTUNG FÜR EINE GLIEDERKETTE**

(71) Anmelder: pewag austria GmbH, 8041 Graz (AT)
(72) Erfinder: Bernhard, Oswald, 8605 Kapfenberg (AT); Kaya, Serkan, 8600 Bruck/Mur (AT)
(74) Vertreter: Patentanwaltskanzlei Matschnig & Forsthuber OG

(57) **Zusammenfassung**

Eine Verkürzungsvorrichtung (10) für eine Gliederkette mit Kettengliedern vorgegebener Dimension, umfasst einen Kopfteil (11) zur Anbindung eines Kettenstrangs (51) der Gliederkette und einen mit dem Kopfteil (11) über einen Verbindungsbereich (13) verbundenen Anschlussteil (14) zur Anbindung eines Anschlussstrangs, z. B. fortsetzenden Kettenstrangs. Durch eine Öffnung (12) in dem Kopfteil (11) lässt sich der Kettenstrang (51) entlang einer Längsachse (x) führen, deren Verlängerung durch den Anschlussteil (14) verläuft. Ein in dem Kopfteil (11) vorgesehenes, darin bewegliches Sicherungselement (21) dient dem Blockieren eines Kettenglieds der vorgegebenen Dimension gegen ein Hindurchtreten durch die Öffnung (12); es kann z. B. gegen Federkraft in eine Stellung gebracht werden, in der es eine Bewegung des Kettenstrangs (51) durch die Öffnung (12) hindurch freigibt.

## Beschreibung

Die Erfindung betrifft eine Verkürzungsvorrichtung, die die Verkürzung bzw. Längeneinstellung einer Gliederkette gestattet, sowie ein Kettengehänge mit einer Verkürzungsvorrichtung dieser Art.

Verkürzungsvorrichtungen, auch als Kettenverkürzer oder kurz Verkürzer bezeichnet, werden insbesondere beim Anschlagen von Lastketten und Kettengehängen, aber auch bei Zurrketten, verwendet. Hierbei dienen Verkürzer dem Einstellen der Länge einer Kette, in der Regel ausgehend von einer vorbestimmten maximalen Länge.

Häufig werden Kettenverkürzer direkt an oder in enger Nähe zu dem Aufhängering des Kettengehänges vorgesehen, z. B. in Form eins oder mehrerer Parallelhaken, die an dem Aufhängering (neben den eigentlichen Kettensträngen) montiert sind und in die ein Kettenglied eines Kettenstrangs eingehängt werden kann. Hierbei erfolgt die Auswahl des Kettenglieds je nachdem, welche Länge des Kettenstranges verbleiben soll.

Bei dieser Art der Kettenverkürzung ist es zum Einstellen der Kettenlänge erforderlich, das Gehänge ganz abzusenken, damit der Benutzer (Anschläger) den Aufhängering und den dort befindlichen Kettenverkürzer erreichen kann. Dies führt jedoch zu hohem Zeitaufwand und erschwert ein Einschätzen der tatsächlich zweckmäßigen Länge der Lastkette.

Daneben gibt es Verkürzer, die ein Einsetzen an einer beliebigen Stelle im Kettenstrang ermöglichen. Bei diesen wird an einer Stelle des Verkürzers eines der Kettenglieder des Kettenstranges fixiert, und der Verkürzer weist an einer anderen Stelle eine Verkürzungsklaue auf, in die ein anderes Kettenglied eines weiter unten gelegenen Strangstücks eingehängt werden kann, wodurch der zwischen diesen Kettengliedern liegende Teil des Kettenstrangs überbrückt und so eine Verkürzung des Kettenstrangs erzielt wird. Bei Verwendung dieser Art von Verkürzern kann darauf verzichtet werden, das Gehänge ganz abzusenken, bis sich der Aufhängering beim Anschläger befindet. Dadurch kann die erforderliche Kettenlänge leichter eingestellt werden, und zudem wird der Zeitaufwand verringert.

In EP 1907 726 B1 ist eine Verkürzungsklaue beschrieben, die eine Tasche zur Aufnahme eines Kettengliedes aufweist, wobei die Tasche einen Schlitz aufweist, in die ein anschließendes Kettenglied zu liegen kommt. Durch ein hierzu querverlaufendes elastisch verformbares Sicherungselement kann ein ungewolltes Herausrutschen der Kettenglieder verhindert werden.

Diese bekannten Verkürzer sind deshalb nachteilig, weil sie die Kette klauenartig umfassen und/oder die Kette in einen Schlitz eingehängt werden muss. Um dies zu bewerkstelligen, ist häufig besondere Geschicklichkeit erforderlich. Für die Verkürzung sind in der Praxis zwei Hände erforderlich, nämlich um mit einer Hand den Verkürzer und mit der anderen Hand die Kette zu manipulieren. Bei größeren Dimensionen und damit Gewichten der Kette ist eine Verkürzung durch eine einzelne Person nur sehr schwer durchzuführen oder gänzlich unmöglich.

Es ist daher Aufgabe der Erfindung, eine Verkürzungsvorrichtung zu schaffen, die auch für größere Ketten mit einer Hand bedient werden kann.

Diese Aufgabe wird durch eine Verkürzungsvorrichtung gelöst, welche erfindungsgemäß einen Kopfteil zur Anbindung eines Kettenstrangs einer Gliederkette und einen mit diesem Kopfteil über einen Verbindungsbereich verbundenen Anschlussteil zur Anbindung eines Anschlusselements oder Anschlussstrangs beinhaltet; der Kopfteil weist eine Öffnung auf, durch die ein Kettenstrang mit Kettengliedern vorgegebener Dimension entlang einer Längsachse führbar ist, deren Verlängerung durch den Anschlussteil verläuft; und in dem Kopfteil ist ein darin bewegliches Sicherungselement zum (wahlweisen) Blockieren eines Kettenglieds der vorgegebenen Dimension gegen ein Hindurchtreten durch die Öffnung vorgesehen.

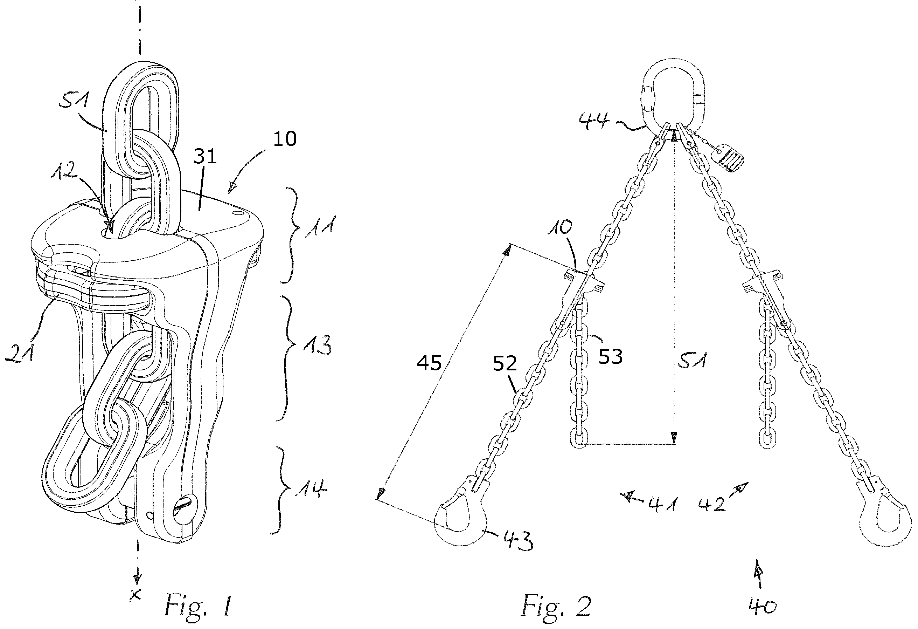

Durch diese Lösung wird eine Verkürzungsmöglichkeit geschaffen, die - entgegen den bisherigen Gewohnheiten - möglichst nahe am *unteren* Ende des Kettengehänges montiert wird (vgl. Fig. 2). Dem entsprechend wird der vom Verkürzer *aufwärts* liegende Teil der Kette verkürzt: Die obere Kette läuft durch den Verkürzer durch und muss beim Verkürzungsvorgang somit nicht eigens manipuliert werden. Dies ermöglicht zudem, dass die Verkürzungsvorrichtung während des Verkürzungsvorgangs mit einer Hand gehalten werden kann, während dessen das Sicherungselement betätigbar ist - beispielsweise durch einen Finger derselben Hand.

Die erfindungsgemäße Verkürzungsvorrichtung hat außerdem den Vorteil, dass die Kette zum Verkürzen nicht aus dem Verkürzer genommen werden muss, sondern innerhalb der Vorrichtung läuft und durch diese geführt ist ("Inline-Verkürzer"); je nach Bedarf kann bei einer gewünschten, geeigneten Stelle der Kette blockiert und so eine gewünschte Länge der Kette eingestellt werden.

Hierbei bedeutet ein "Führen' der Kettenglieder durch die Öffnung, dass die Kettenglieder (die im Kettenstrang nach bekannter Art abwechselnde Orientierung aufweisen können) durch die Öffnung nacheinander und linear durchlaufen (z. B. gezogen werden) können, vorzugsweise ohne dass die Kettenglieder in der Öffnung zueinander gedreht oder abgewinkelt werden müssen, wobei die Öffnung zumindest vorübergehend als Führung (seitliches Halten) für die so durchgezogenen Kettenglieder dient.

Zum Anbinden des unteren Kettenteils dient der erwähnte Anschlussteil, an dem der untere Kettenteil montiert wird, in der Regel mit fester Länge während des Anschlagvorgangs. Aufgrund der Erfindung ergibt sich ein gegenüber der Öffnung angeordnetes Anschlusselement, an das der untere Kettenteil oder allgemeiner ein Anschlussstrang in Verlängerung der Längsachse des oberen Kettenteils anschließbar ist. Dies ergibt den Vorteil einer entlang der Längsachse fluchtende Kraftlinie des oberen Kettenstrangs und des Anschlussstrangs. In den meisten Anwendungen ist der Anschlussstrang ein Gliederkettenstrang mit gleichartiger Dimensionierung wie der Kettenstrang, der durch die Öffnung geleitet wird, jedoch kann anstelle eines Anschlussstrangs auch direkt ein Anschlusselement wie z. B. ein Endhaken angebracht sein.

In einer Weiterbildung der Erfindung, die die Handhabung der Vorrichtung weiter erleichtert, kann das Sicherungselement durch eine Bewegung quer zur Längsachse in eine Stellung gebracht werden, in der es eine Bewegung eines durch die Öffnung geführten Kettenstrangs durch die Öffnung hindurch freigibt. Zudem kann das Sicherungselement eine schlüssellochartige Öffnung aufweisen. Eine derartig schlüssellochartige Öffnung kann an einem ersten Ende eine Erweiterung aufweisen, durch die hindurch Kettenglieder des Kettenstrangs - insbesondere Kettenglieder mit abwechselnder Orientierung - nacheinander durchlaufen können, und an einem zweiten Ende in eine schlitzartige Öffnungsverlängerung übergehen. Im Besonderen kann die schlüssellochartige Öffnung kreuzförmig sein, wobei die Breite der schlitzartigen Öffnungsverlängerung sowie von dazu querverlaufenden schlitzartigen Öffnungsschenkeln der Glieddicke der Kettenglieder gemäß der vorgegebenen Dimension entspricht.

Zur Erhöhung der Sicherheit des Betriebs ist es günstig, wenn das Sicherungselement durch zumindest ein Federelement in die blockierende Stellung vorgespannt ist, in der das Sicherungselement eine Bewegung eines durch die Öffnung verlaufenden Kettenstrangs durch die Öffnung hindurch blockiert.

Der Anschlussteil kann zudem ein in Verlängerung der Längsachse angeordnetes Anschlussbauteil (z. B. einen Bolzen) aufweisen, an das ein Anschlussglied eines Anschlussstrangs unverlierbar angefügt bzw. anschließbar ist. Dieses Anschlussglied kann ein gesondertes Bauteil sein, das z. B. in den Anschlussteil eingesetzt wird, oder auch mit dem verwendeten Anschlussbauteil einstückig sein, wie z. B. ein Endhaken.

In einer zweckmäßigen Ausgestaltung der Erfindung kann der Anschlussteil als Gabelanschluss mit zwei in einem Abstand nebeneinander angeordneten Gabelwangen ausgebildet sein; diese können durch einen Bolzen überbrückt verbunden werden. Hierbei kann der Abstand vorzugsweise der Glieddicke eines Kettengliedes eines Anschlussstrangs entsprechen, und die Dimensionierung dieses Kettenglied kann zudem der vorgegebenen Dimension des am Kopfteil durchgeführten Kettenstrangs entsprechen.

Um das Durchziehen des Kettenstrangs durch die Verkürzungsvorrichtung zu erleichtern, ist es günstig, wenn der Verbindungsbereich einen freien Raum zwischen dem Kopfteil und dem Anschlussteil definiert. Ein Kettenglied, das durch die Öffnung entlang der Längsachse eintritt, gelangt somit in den freien Raum; dieser ist ausreichend groß ausgelegt, um (zumindest) ein Kettenglied nach dem Durchtritt durch die Öffnung aufzunehmen. Zudem ist es in der Regel günstig, wenn der freie Raum zum Anschlussteil hin durch zumindest eine gegen die Längsachse geneigte Fläche (Rampe) abgeschlossen wird, durch die das Kettenglied bei weiterer Bewegung von der Längsachse weg abgelenkt wird. Hierbei kann der Verbindungsbereich zudem als Tasche oder Wanne ausgebildet sein, in die die Öffnung mündet, wobei der Innenraum dieser Tasche oder Wanne den freien Raum bildet, der nach einer Seite, durch die das Kettenglied bei weiterer Bewegung abgelenkt wird, offen ist, jedoch zu der gegenüber liegenden Seite hin durch eine Rückwand abgedeckt ist.

In Kombination hierzu oder als Alternative kann die Tasche, die von der Rückwand zwischen dem Kopfteil und dem Anschlussteil gebildet wird, sich zu einer Seite hin öffnen, die mit jener Seite übereinstimmt, zu der das Sicherungselement hin bewegt wird, um die blockierende Stellung zu erreichen.

Außerdem kann ein Fixiermittel zum Festlegen des Sicherungselements in der blockierenden Stellung vorgesehen sein.

Des Weiteren ist es für eine gesteigerte Festigkeit der Verkürzungsvorrichtung günstig, wenn der Kopfteil (ohne Sicherungselement) mit dem Verbindungsbereich und dem Anschlussteil einstückig ist, was allerdings nicht ausschließt, dass zusätzliche gesonderte Bauteile wie z. B. Bolzen oder Fixierschrauben vorgesehen sein können.

Die erfindungsgemäße Verkürzungsvorrichtung eignet sich im Besonderen für ein Kettengehänge mit zumindest einer Gliederkette, die einerseits an einem oberen Ende (oder im Allgemeinen einem Befestigungsende) befestigt ist und andererseits durch die Verkürzungsvorrichtung gezogen ist. Hierbei ist günstiger Weise der Kopfteil der Verkürzungsvorrichtung zum oberen Ende der Gliederkette hin orientiert, und / oder der unterhalb der Verkürzungsvorrichtung befindliche Abschnitt der Gliederkette unbelastet. Zudem ergibt sich eine vorteilhafte Ausgestaltung, wenn an den Anschlussteil der Verkürzungsvorrichtung eine Gliederkette mit Kettengliedern angekoppelt ist, deren Dimension jener der Kettenglieder der durch die Verkürzungsvorrichtung gezogenen Gliederkette entspricht.

Die Erfindung samt weiteren Ausgestaltungen und Vorzügen wird nachstehend anhand einiger Ausführungsformen näher erläutert, welche in den beigefügten Zeichnungen in schematischer Form dargestellt sind. Darin ist
- Fig. 1: eine perspektivische Ansicht einer ersten Ausführungsform der erfindungsgemäßen Verkürzungsvorrichtung, einschließlich eines durch den Kopfteil geführten Kettenstrangs,
- Fig. 2: eine schematisches Beispiel eines Kettengehänges, in dem die erfindungsgemäße Verkürzungsvorrichtung zur Anwendung kommt,
- Fig. 3: eine Explosionsansicht der Verkürzungsvorrichtung der Fig. 1,
- Fig. 4: eine Aufsicht auf die Verkürzungsvorrichtung der Fig. 1,
- Fig. 5: eine Aufsicht auf den Schieber der Verkürzungsvorrichtung,
- Fig. 6: eine Schnittansicht der Verkürzungsvorrichtung gemäß der Schnittebene 6-6 in Fig. 4 (zugleich Symmetrieebene), wobei der Schieber in "offener" Stellung ist,
- Fig. 7: eine der Fig. 6 entsprechende perspektivische Schnittdarstellung der Verkürzungsvorrichtung in "offener" Stellung, wobei der Schieber ganz gezeigt ist,
- Fig. 8: eine weitere Schnittdarstellung, jedoch in "blockierender" Stellung,
- Fig. 9: eine Schnittansicht der Verkürzungsvorrichtung gemäß der Schnittebene 9-9 in Fig. 4,
- Fig. 10: eine andere Ausführungsform der Erfindung, mit einem Fixiermittel für den Schieber, und
- Fig. 11: die Verkürzungsvorrichtung der Fig. 10 mit gelöstem Fixiermittel.

Es sei festgehalten, dass die hier beschriebenen Ausführungsbeispiele lediglich zum besseren Verständnis der vorliegenden Erfindung gegeben sind und die Erfindung nicht auf diese eingeschränkt ist. Merkmale, die als vorteilhaft, bevorzugt oder beispielhaft beschrieben werden, stellen optionale Elemente oder Maßnahmen dar, die als besonders günstig oder zweckmäßig für die Erfindung bzw. eine Ausführungsform angesehen werden, ohne dass dies bedeuten muss, dass sie für die Erfindung oder deren Ausführungsformen wesentlich wären. Ebenso dienen die Bezugszeichen in den Ansprüchen lediglich zur Erläuterung und sind nicht einschränkend auszulegen.

Fig. 1 zeigt eine Verkürzungsvorrichtung 10 gemäß einer ersten Ausführungsform der Erfindung; im Folgenden meist einfach "Verkürzer" genannt. Der Verkürzer 10 ist in aufrechter Orientierung gezeigt, in der seine Längsachse x mit der Vertikalen zusammenfällt; je nach Anwendung kann die Längsachse x des Verkürzers auch mit einem mehr oder weniger großen Winkel >0° gegen die Vertikale geneigt sein.

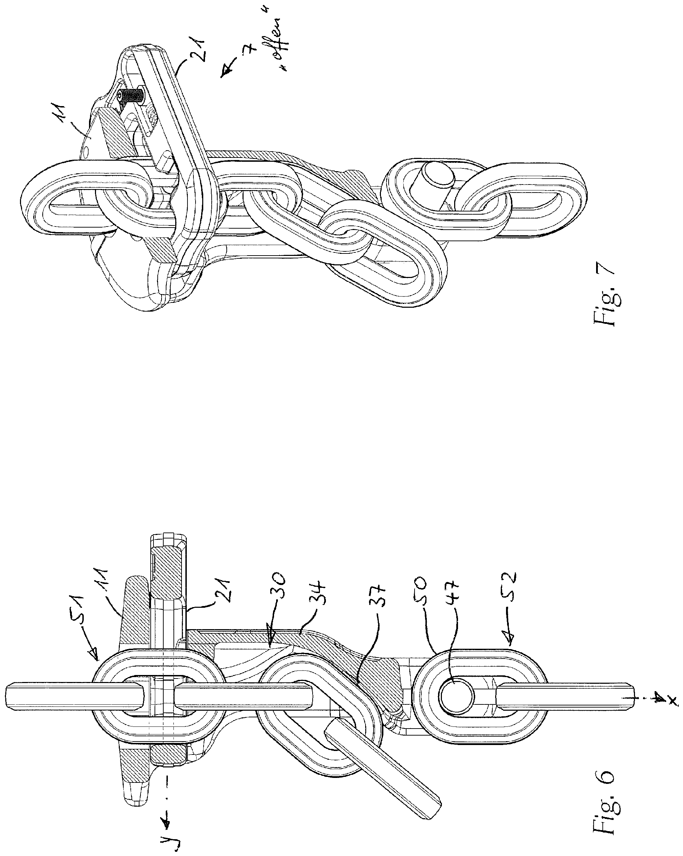

Der Verkürzer 10 weist an seinem oberen Ende einen Kopfteil 11 mit einer Öffnung 12 sowie an seinem unteren Ende einen Anschlussteil 14 auf, an den eine (in Fig. 1 nicht gezeigte) Anschlusskette oder alternativ direkt ein Endhaken angebracht werden kann. Kopfteil und Anschlussteil sind über einen Verbindungsbereich 13 miteinander verbunden, der vorteilhafter Weise dafür ausgelegt ist, ein Ergreifen des Verkürzers 10 mit einer Hand zu ermöglichen - in der Regel von der Rückseite her, indem die Finger der Hand die Seitenflanken 35, 36 des Verbindungsbereichs 13 umgreifen, mit dem Handteller an der Rückwand 34 (Fig. 6).

Die Öffnung 12 verläuft durch den Kopfteil 11 entlang der Längsachse x des Verkürzers als Durchgangskanal und mündet in einen Innenraum im Verbindungsbereich 13. Ein "oberer" Kettenstrang 51 einer Gliederkette (von der in Fig. 1 beispielhaft sechs Kettenglieder gezeigt sind) kann von oben her durch die Öffnung 12 geführt werden und gelangt in einen vom Verbindungsbereich 13 gebildeten Innenraum 30, von wo er weiter von der Längsachse x weggeführt und an der Vorderseite den Verkürzer verlässt. Der Anschlussteil 14 ist so in Bezug auf die Längsachse x positioniert, dass ein daran angebrachter Anschlussstrang 52 (Fig. 2) in der Längsachse x liegen kann, sodass sich eine entlang der Längsachse x fluchtende Kraftlinie des oberen Teils des Kettenstrangs 51 und des Anschlussstrangs ergibt.

In dem Kopfteil 11 befindet sich ein Schieber 21, der in einer Richtung y quer zur Längsachse x verschiebbar ist, mit einer Öffnung 22 versehen ist und dazu dient, eine durch die Öffnung 12 des Kopfteils 11 geführte Gliederkette 51 je nach seiner Stellung an einem Kettenglied der Gliederkette zu blockieren, wie weiter unten eingehend beschrieben wird. Der Schieber 21 steuert so als Sicherungselement gemäß der Erfindung die Freigabe bzw. Blockierung der Gliederkette 51.

Fig. 2 illustriert ein typisches Beispiel eines Kettengehänges 40, in dem einer oder mehrere der Verkürzer der erfindungsgemäßen Art eingesetzt sind. An einem Aufhängering 44 sind beispielsweise zwei Lastketten 41, 42 eingehängt, die jeweils in einem Lasthaken 43 enden und die jeweils einen Verkürzer 10 des in Fig. 1 gezeigten Typs beinhalten. Am Beispiel der Lastkette 41 (für die zweite Lastkette 42 gilt Entsprechendes) wird der untere Abschnitt der Lastkette durch einen Endkettenstrang (Anschlusssegment) 45 gebildet, der von einem an dem Anschlussteil des Verkürzers 10 permanent angekoppelten Anschlussstrang 52 in Form eines Gliederkettenstücks gebildet ist, an dessen unterem Ende einer der Lasthaken 43 angeschlossen ist. Der obere Abschnitt der Lastkette 41 wird durch eine Gliederkette 51 gebildet, die über z. B. ein Verbindungsglied am Ring 44 angeschlossen ist. Die Gliederkette 51 dient als Verkürzungskette; an ihr wird die gewünschte Länge eingestellt. Das andere (untere) Ende der Verkürzungskette ist in der Regel offen; jedoch kann das letzte Glied der Verkürzungskette nach dem Durchführen durch den Verkürzer auch mit einem (nichtgezeigten) Verriegelungselement gesichert werden, um ein Durchrutschen aus dem Verkürzer zu verhindern. Hierzu wird die Gliederkette 51 durch den Verkürzer 10 geführt, wobei der unter Abschnitt 53 der Kette 51 in aller Regel unbelastet bleibt. Die Lastkraft wird dagegen durch den oberen Teil der Gliederkette 51 und den Anschlussstrang 52 geleitet, die vorteilhafter Weise zufolge der Erfindung in einer Linie liegen, die günstiger Weise mit der Längsachse x des Verkürzers koinzidiert. Das andere (untere) Ende der Verkürzungskette 51 bleibt häufig offen; jedoch kann das letzte Glied der Verkürzungskette auch nach dem Durchführen durch den Verkürzer auch mit einem (nichtgezeigten) Verriegelungselement gesichert werden, um ein Durchrutschen aus dem Verkürzer zu verhindern.

Im belasteten Zustand wird die Lastkraft somit über den Anschlussstrang 52 über den Verkürzer 10 zu dem oberen Abschnitt des Kettenstrangs 51 geleitet. Der Anschlussstrang 52 (bzw. insgesamt der Endkettenstrang 45) bildet somit hinsichtlich der Last eine Fortsetzung des oberen Kettenstrangabschnitts 51, mit einer fluchtenden Kraftlinie entlang der Längsachse x. Mit anderen Worten, im belasteten Zustand sind der obere Abschnitt des Kettenstrangs 51 und der Anschlussstrang 52 in einer Linie gespannt, die der Längsachse x des Verkürzers entspricht.

Somit wird, wie in Fig. 2 illustriert ist, die erfindungsgemäß geschaffene Verkürzungsvorrichtung - anders als bisherige Verkürzer - nahe dem *unteren* Ende des Kettengehänges montiert, nämlich vom unteren Abschnitt 53 der Verkürzungskette her. Die Verkürzer 10 wird hierbei von unten über die Verkürzungskette hinaufgeschoben, wobei die Verkürzungskette durch den erfindungsgemäßen Verkürzer hindurch läuft. Somit muss die Verkürzungskette selbst beim Verkürzungsvorgang nicht manipuliert werden; vielmehr reicht die Handhabung des Verkürzers aus.

Neben den (bevorzugten) aufrechten Orientierungen wie in Fig. 2 illustriert kann falls erforderlich der Verkürzer auch in liegender Orientierung eingesetzt werden, indem die Längsachse im Wesentlichen horizontal ausgerichtet wird, wobei der untere (lastlose) Teil der Verkürzungskette den Verkürzer günstiger Weise nach unten hin verlässt.

Die hier betrachteten Gliederketten 51, 52 sind bevorzugt Profilketten, jedoch können auch Rundgliederketten verwendet werden. Die Gliederkette können z. B. mit einer Glieddicke der Kettenglieder von 4 mm oder 10 mm (Stranghöhe) ausgebildet sein.

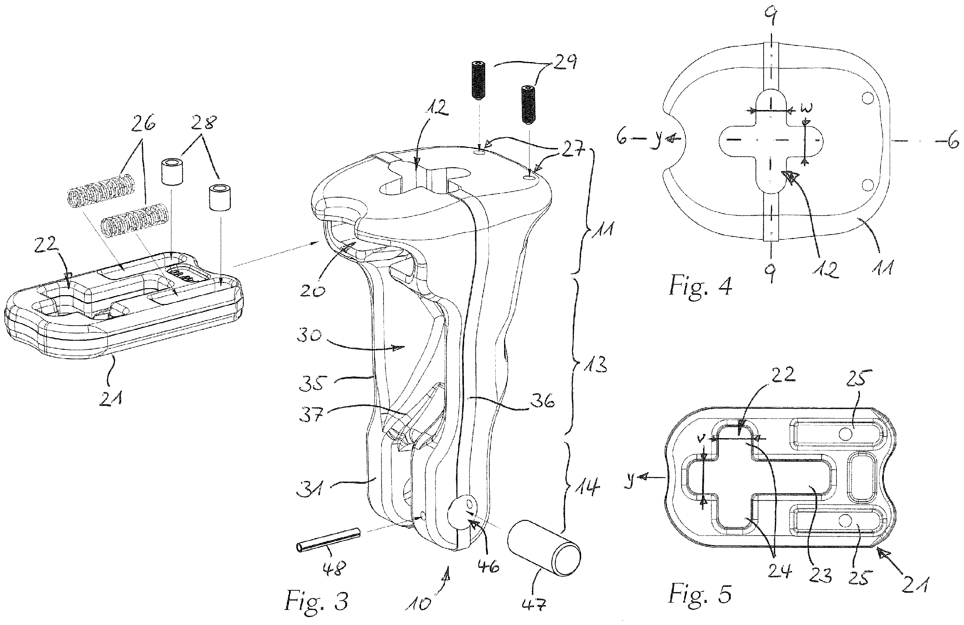

Bezugnehmend auf Fig. 3 ist der Verkürzer 10 ein entlang der Längsachse x länglich geformtes Bauteil, das zudem zweiseitig symmetrisch gemäß einer Spiegelebene 6 (Fig. 4) ausgebildet sein kann. Die Hauptkomponente des Verkürzers 10 ist ein Körper 31, der z. B. aus einem einzelnen Stück Schmiedestahl durch Gesenkformen und darauffolgendes Fräsen der Öffnungen in Kopfteil und Anschlussteil hergestellt wird. Somit ist der Körper, der (die Gehäuseteile von) Kopfteil, Verbindungsbereich und Anschlussteil des Verkürzers 31 bildet, einstückig, was eine hohe mechanische Belastbarkeit und Widerstandsfähigkeit ergibt. In dem Kopfteil 11 ist zudem ein Aufnahmeraum 20 vorgesehen, in dem der Schieber 21 beweglich gelagert ist. Der Aufnahmeraum 20 verläuft entlang der Richtung y, und diese Anordnung des Schiebers 21 gestattet vorteilhafter Weise, dass er mit derselben Hand betätigt werden kann, mit der der Verkürzer 10 selbst gehalten wird.

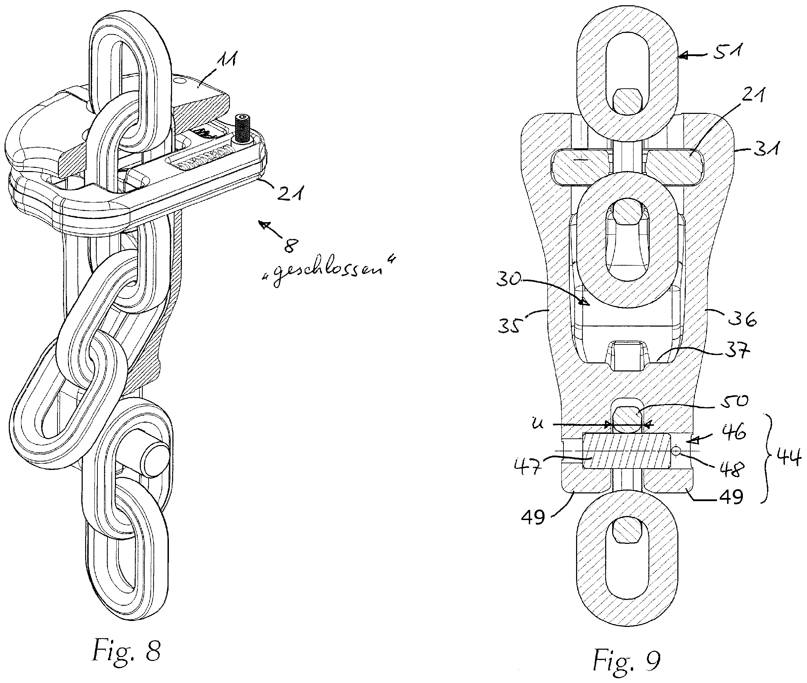

Der Anschlussteil 14 stellt eine Einrichtung zum Ankoppeln eines Anschlussstrangs oder Anschlusselements dar. Bezugnehmend auf Fig. 3 und 9 ist der Anschlussteil 14 im gezeigten Ausführungsbeispiel eine Anschlussgabel 44, die durch zwei Gabelwangen 49 mit kollinearen Bohrungen 46 gebildet ist. Durch die Bohrungen 46 wird ein Bolzen (Anschlussbolzen) 47 geführt und mithilfe eines Sicherungstifts 48 gesichert. Dies ergibt eine dauerhafte Ankoppelung des Bolzens 47 und damit angekoppelten Anschlussglieds 50 des Anschlussstrangs 52, wobei diese Ankoppelung dennoch bei Bedarf durch Ausstoßen des Sicherungsstifts 48 gelöst werden kann. Die Gabelwangen 49 liegen zueinander in einem Abstand u, der vorteilhafter Weise entsprechend der Glieddicke des Anschlussglieds des Anschlussstrangs 52 ausgelegt sein kann.

Wie auch in Fig. 4 ersichtlich ist, weist die Öffnung 12 im Kopfteil 11 eine Formgebung auf, die ein Hindurchlaufen der Gliederkette 51, die aus abwechselnd orientierten Kettengliedern gebildet ist, entlang der Längsachse x ermöglicht. Vorteilhafter Weise ist die Öffnung 12 als im Wesentlichen kreuzartiger Schlitz ausgebildet. Die Weite w der Schenkel des Kreuzes der Öffnung 12 sind der Glieddicke der Kettenglieder entsprechend gewählt, d. h. nur geringfügig größer als die Glieddicke, um ein zügiges Durchlaufen der Kette durch die Öffnung im "offenen' Zustand des Verkürzers zu gestatten.

Fig. 5 zeigt den Schieber 21 in einer Aufsicht, worin die schlüsselloch- oder kreuzartige Formgebung der Öffnung 22 in dem Schieber ersichtlich ist. Der Schieber 21 ist ebenfalls ein senkgeschmiedetes Bauteil. Die Formgebung der Öffnung 22 ist bevorzugt die eines Kreuzes, wobei ein in Richtung y verlaufender Schenkel 23 verlängert ist; auch hier ist die Weite v der Schenkel des Kreuzes der Glieddicke der Kettenglieder entsprechend gewählt, um ein zügiges Durchlaufen der Kette durch die Öffnung im "offenen" Zustand des Verkürzers zu gestatten. Anstelle eines Kreuzes kann für die Öffnung 22 eine andere geeignete Formgebung verwendet werden, bei der ein seitlich der Richtung y erweiterter Teil 24 in einen schmalen, schlitzförmigen Teil 23 übergeht.

Parallel zu der Bewegungsrichtung y des Schiebers, beispielsweise beiderseits des verlängerten Schenkels 23, sind in dem Schieber zwei Nuten 25 geformt, die jeweils eine Feder 26 (Fig. 3) aufnehmen. Diese Federn 26 dienen dazu, den Schieber in der Richtung y (Fig. 6) zur "blockierenden" Stellung hin vorzuspannen. Durch Druck auf das vorderseitige Ende des Schiebers - in Fig. 6 auf das linke Ende nach rechts - kann somit der Schieber gegen die Federkraft bewegt werden. Alternativ zu den Federn 26 könnten auch andere Mittel vorgesehen werden, um den Schieber in der "blockierenden" Stellung vorzuspannen oder darin zu halten, beispielsweise ein lösbarer Riegel. Eine gefederte Vorspannung ist aus Sicherheitsgründen vorteilhaft, weil so bei Loslassen der Verkürzungsvorrichtung automatisch ein Blockieren eintritt und somit eine eventuell gefährdende Bewegung der Gliederkette 51 unterbunden wird.

Aufgrund der Beweglichkeit des Schiebers 21 im Kopfteil 11 wirken die Öffnungen 12 und 22 nach Art gegeneinander verschieblicher Blenden zusammen. Insbesondere werden die zwei querlaufenden (d.h. quer zur Richtung y orientierten) Schenkel 24 der kreuzartigen Schlitze in Abhängigkeit von der Stellung des Schiebers wahlweise gesperrt bzw. freigegeben, wodurch die Kette 51 fixiert wird bzw. für die Längeneinstellung freigegeben wird. Der entlang der Richtung y bewegliche Schieber 21 steuert somit die Freigabe und Blockierung der Gliederkette 51, die jeweils in den Schnittansichten der Fig. 7 und 8 ersichtlich sind: In einer "offenen Stellung" 7 (Fig. 7) kommt der Schieber 21 derart in Bezug auf die Öffnung 12 zu liegen, dass die Gliederkette ohne Behinderung durch Kopfteil und Schieber (somit ein Kettenglied nach dem anderen) hindurch gezogen werden kann. In der Regel jedoch befindet sich der Schieber in einer Stellung 8 ("blockierende Stellung") wie in Fig. 8 gezeigt, in der der die kreuzförmige Teil der Öffnung 22 im Schieber gegenüber der Öffnung 12 versetzt ist, sodass in Längsrichtung x gesehen lediglich ein schlitzförmiger Durchgang verbleibt. In dieser Stellung befindet sich daher ein zur Richtung y parallel orientiertes Kettenglied in dem Durchgang, jedoch eine Bewegung der daran anschließenden Kettenglieder ist durch Formschluss blockiert, wie auch in der Schnittansicht der Fig. 9 (worin nur drei Kettenglieder des Kettenstrangs 51 gezeigt sind) verdeutlicht ist. Auf diese Weise kann eine gewünschte Länge der Gliederkette oberhalb des Verkürzers 10 eingestellt werden.

In der Schnittansicht der Fig. 6 ist erkennbar, wie der Kettenstrang 51 der Gliederkette (von der Fig. 6 bis 8 nur fünf Kettenglieder gezeigt sind) im "offenen" Zustand des Verkürzers 10 durch die Öffnungen 12, 22 hindurchläuft - während eines Verkürzungsvorgangs in der Regel von oben nach unten relativ zum Verkürzer - und hierbei in den Innenraum 30 des Verbindungsbereichs 13 gelangt. Der Verbindungsbereich 13 weist rückseitig eine Rückwand 34 auf, die die beiden Seitenflanken 35, 36 miteinander verbindet, wodurch der Innenraum 30 nach hinten schalen- oder wannenartig abgeschlossen wird. Aufgrund dieser Gestaltung ist es möglich, den Verkürzer von der Rückseite her zu greifen und zu halten, ohne dass die greifende Hand in Kontakt mit dem Kettenstrang in Kontakt kommt. Dies verbessert die Handhabung und Sicherheit des Verkürzers. Die Rückwand 34 geht an ihrem unteren Bereich - d.h. zum Anschlussteil 14 hin - in eine geneigte Fläche (Rampe) 37 über, die den Kettenstrang 51 zur Vorderseite hin lenkt. Die Rampe 37 weist, wie auch in Fig. 9 erkennbar ist, eine mittlere Vertiefung zwischen zwei Schultern auf, um die abwechselnd stehenden und liegenden Kettenglieder der Kette 51 zu führen. Die Rampe 37 bildet außerdem eine mechanische Trennung des Innenraums 30 gegen den Anschlussteil 14 und vermeidet somit eine gegenseitige Behinderung der Kettenstränge 51 und 52.

Wieder Bezugnehmend auf Fig. 3 erfolgt die Montage des Verkürzers 10 wie folgt: In den Körper 31 werden wie bereits erwähnt durch Fräsen Öffnungen erzeugt, nämlich die axiale Öffnung 12, der Aufnahmeraum 20 für den Schieber 21, die quer verlaufenden Bohrungen für den Bolzen 47 sowie eine Bohrung für den Sicherungsstift 48; zudem werden von der Oberseite des Kopfteils 11 her Bohrungen 27 erzeugt. Sodann werden der Schieber 21 und der Anschlussbolzen 47 eingesetzt. Sodann wird der Schieber 21 montiert: Die Federn 26 werden zusammen mit je einer Hülse 28 in die Nuten 25 eingelegt und der Schieber 21 in den Aufnahmeraum eingeschoben, bis die Bohrungen 27 mit den Hülsen 28 fluchten, und mittels Wurmschrauben 29 werden die Hülsen fixiert. Auf diese Weise ist der Schieber 21 federnd in dem Verkürzer 10 befestigt. Schließlich wird der Anschlussstrang 52 in dem Anschlussteil angeschlossen; insbesondere wird hierzu das Anschlussglied 50 (Fig. 9) des Anschlussstrangs 52 in den Raum zwischen den beiden Gabelwangen 49 eingelegt und der Bolzen 47 durch die Bohrungen 46 hindurchgesteckt und mit dem Sicherungsstift fixiert.

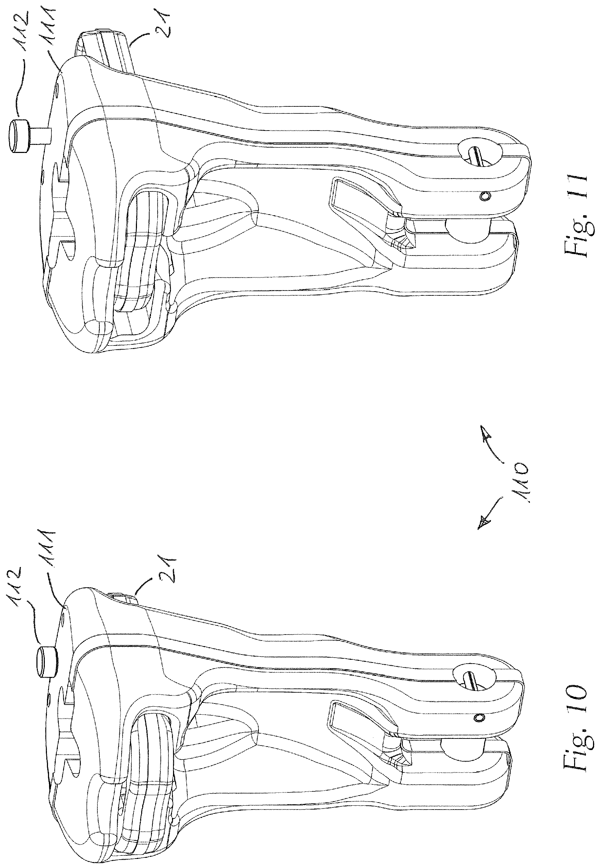

Fig. 10 und 11 zeigt eine Verkürzungsvorrichtung 110 gemäß einem weiteren Ausführungsbeispiel, das zusätzlich einen Fixierstift 112 aufweist, das z. B. an der Oberseite des Kopfteils 111 angeordnet ist. Der Fixierstift 112 wird an dieser Stelle eingesteckt (oder gegebenenfalls eingeschraubt) und wirkt dann auf den Schieber 21 und hält diesen in einer Stellung fest, bevorzugter Weise in der "blockierenden" Stellung wie in Fig. 10 dargestellt. Wird dagegen der Fixierstift gezogen, ist die Bewegung des Schiebers frei und kann in die "offene" Stellung gemäß Fig. 11 gebracht werden.

Wie bereits angedeutet ermöglicht die Erfindung eine Ein-Hand-Bedienung. Es muss lediglich der Verkürzer in die Hand genommen und die Verriegelung betätigt werden. Danach kann der Verkürzer entlang des Kettenstranges (der hierfür nicht eigens abgesenkt werden muss) mit einer Hand bis zur gewünschten Position geschoben werden. Es kann mit einer Hand gearbeitet und die Kettenlänge kann sehr präzise eingestellt werden.

Vorteile des erfindungsgemäßen "Inline-Verkürzers" sind die jederzeit durchführbare Einstellbarkeit der Verkürzung sowie genaue Einstellbarkeit der Kettenlänge der betreffenden Lastkette. Die Anordnung des Anschlussteils am permanent tragenden Kettenstrangteil ermöglicht zudem eine Ein-Hand-Bedienung beim Verkürzen.

Ein weiterer Vorteil ergibt sich bei der Verwendung der erfindungsgemäßen Verkürzungsvorrichtung zum Verkürzen von Zurrketten in Kombination mit einem Kettenspanner: Weil die Länge sehr genau eingestellt werden kann, ist der erforderliche Spannweg für den Kettenspanner kürzer als bei bisherigen Einrichtungen zum Verkürzen. Zudem muss der Kettenspanner dann nur geringfügig gelöst werden, um die Kette durch den Schieber im Kettenverkürzer ganz und schnell frei zu geben.

## Patentansprüche

1. Verkürzungsvorrichtung (10,110) aufweisend
- einen Kopfteil (11) zur Anbindung eines Kettenstrangs (51) einer Gliederkette, und
- einen mit dem Kopfteil (11) über einen Verbindungsbereich (13) verbundenen Anschlussteil (14) zur Anbindung eines Anschlusselements oder Anschlussstrangs (52),
wobei
der Kopfteil (11) eine Öffnung (12) aufweist, durch die ein Kettenstrang (51) mit Kettengliedern vorgegebener Dimension entlang einer Längsachse (x) führbar ist, deren Verlängerung durch den Anschlussteil (14) verläuft, und
in dem Kopfteil (11) ein darin bewegliches Sicherungselement (21) zum wahlweisen Blockieren eines Kettenglieds der vorgegebenen Dimension gegen ein Hindurchtreten durch die Öffnung (12) vorgesehen ist.

2. Verkürzungsvorrichtung nach Anspruch 1, **dadurch gekennzeichnet, dass** das Sicherungselement (21) durch eine Bewegung quer zur Längsachse (x) in eine Stellung (7) bringbar ist, in der es eine Bewegung eines durch die Öffnung geführten Kettenstrangs (51) durch die Öffnung (12) hindurch freigibt.

3. Verkürzungsvorrichtung nach Anspruch 2, **dadurch gekennzeichnet, dass** das Sicherungselement (21) eine schlüssellochartige Öffnung (22) aufweist, welche an einem ersten Ende eine Erweiterung (24) aufweist, durch die Kettenglieder des Kettenstrangs nacheinander hindurchlaufen können, und an einem zweiten Ende in eine schlitzartige Öffnungsverlängerung (23) übergeht.

4. Verkürzungsvorrichtung nach Anspruch 3, **dadurch gekennzeichnet, dass** die schlüssellochartige Öffnung (22) kreuzförmig ist, wobei die Breite der schlitzartigen Öffnungsverlängerung (23) sowie von dazu querverlaufenden schlitzartigen Öffnungsschenkels (24) der Glieddicke der Kettenglieder gemäß der vorgegebenen Dimension entspricht.

5. Verkürzungsvorrichtung nach einem der vorhergehenden Ansprüche, **dadurch gekennzeichnet, dass** das Sicherungselement durch zumindest ein Federelement (26) in eine blockierende Stellung (8) vorgespannt ist, in der das Sicherungselement eine Bewegung eines durch die Öffnung (12) verlaufenden Kettenstrangs durch die Öffnung hindurch blockiert.

6. Verkürzungsvorrichtung nach einem der vorhergehenden Ansprüche, **dadurch gekennzeichnet, dass** der Anschlussteil (14) zudem ein in Verlängerung der Längsachse (x) angeordnetes Anschlussbauteil (47) aufweist, an das ein Anschlussglied (50) eines Anschlussstrangs unverlierbar anschließbar ist.

7. Verkürzungsvorrichtung nach einem der vorhergehenden Ansprüche, **dadurch gekennzeichnet, dass** der Anschlussteil (14) als Gabelanschluss mit zwei in einem Abstand (u) nebeneinander angeordneten Gabelwangen (49) ausgebildet ist, die durch einen Bolzen (47) überbrückbar sind, wobei der Abstand (u) vorzugsweise der Glieddicke eines Kettengliedes (50) eines Anschlussstrangs (52) entspricht, welches Kettenglied zudem der vorgegebenen Dimension entspricht.

8. Verkürzungsvorrichtung nach einem der vorhergehenden Ansprüche, **dadurch gekennzeichnet, dass** der Verbindungsbereich (13) einen freien Raum (30) zwischen dem Kopfteil (11) und dem Anschlussteil (14) definiert, wobei der freie Raum (30) zur Aufnahme eines Kettenglieds nach dem Durchtritt durch die Öffnung (12) entlang der Längsachse (x) eingerichtet ist und der freie Raum zum Anschlussteil hin durch zumindest eine gegen die Längsachse (x) geneigte Fläche (37) abgeschlossen wird, durch die das Kettenglied bei weiterer Bewegung von der Längsachse weg abgelenkt wird.

9. Verkürzungsvorrichtung nach Anspruch 8, **dadurch gekennzeichnet, dass** der Verbindungsbereich (13) als Tasche ausgebildet ist, in die die Öffnung (12) mündet, und der Innenraum der Tasche den freien Raum (30) bildet, der nach einer Seite, durch die das Kettenglied bei weiterer Bewegung abgelenkt wird, offen ist, jedoch zu der gegenüber liegenden Seite hin durch eine Rückwand (34) abgedeckt ist.

10. Verkürzungsvorrichtung nach einem der vorhergehenden Ansprüche, **dadurch gekennzeichnet, dass** der Verbindungsbereich (13) eine Rückwand (34) beinhaltet, die sich zwischen dem Kopfteil (11) und dem Anschlussteil (14) erstreckt und eine Tasche bildet, die sich zu einer Seite hin öffnet, die mit jener Seite übereinstimmt, zu der das Sicherungselement (21) hin bewegt wird, um eine blockierende Stellung (8) für einen durch die Öffnung verlaufenden Kettenstrang zu erreichen.

11. Verkürzungsvorrichtung (110) nach einem der vorhergehenden Ansprüche, **gekennzeichnet durch** ein Fixiermittel (112) zum Festlegen des Sicherungselements (21) in einer blockierenden Stellung (8), in der das Sicherungselement (21) eine Bewegung eines durch die Öffnung verlaufenden Kettenstrangs (51) durch die Öffnung (12) hindurch blockiert.

12. Verkürzungsvorrichtung nach einem der vorhergehenden Ansprüche, **dadurch gekennzeichnet, dass** der Kopfteil (11) mit dem Verbindungsbereich (13) und dem Anschlussteil (14) einstückig ist.

13. Kettengehänge mit zumindest einer Gliederkette (51), die an einem oberen Ende befestigt und durch eine Verkürzungsvorrichtung (10,110) nach einem der vorhergehenden Ansprüche gezogen ist, wobei der Kopfteil der Verkürzungsvorrichtung zum oberen Ende der Gliederkette (51) hin orientiert ist.

14. Kettengehänge nach Anspruch 13, wobei der unterhalb der Verkürzungsvorrichtung befindliche Abschnitt (53) der Gliederkette unbelastet ist.

15. Kettengehänge nach Anspruch 13 oder 14, wobei an den Anschlussteil (14) der Verkürzungsvorrichtung ein Anschlussstrang in Form einer Gliederkette (52) mit Kettengliedern (50) angekoppelt ist, deren Dimension jener der Kettenglieder des durch die Verkürzungsvorrichtung gezogenen Gliederkette (51) entspricht.
